# EUROPÄISCHE PATENTSCHRIFT

(11) **EP 0 940 321 B1**
(45) Veröffentlichungstag und Bekanntmachung des Hinweises auf die Patenterteilung: **02.05.2003**
(21) Anmeldenummer: 99101607.2
(22) Anmeldetag: 03.02.1999
(51) Int. Cl.: B62D 25/08, B62D 21/11, B62D 21/12, B60G 9/00

(54) **Fahrgestell eines schweren Nutzfahrzeuges**
Chassis for a heavy-duty utility vehicle
Chassis pour véhicule utilitaire lourd

(30) Priorität: 04.03.1998 DE 19809203
(43) Veröffentlichungstag der Anmeldung: 08.09.1999
(73) Patentinhaber: MAN Nutzfahrzeuge Aktiengesellschaft, 80976 München (DE)
(72) Erfinder: Rühmann, Gerd, Dipl.-Ing. (FH), 82229 Seefeld (DE); Sigl, Johann, Dipl.-Ing. (FH), 82266 Becher (DE); Breitling, Ullrich, Dr.-Ing., 81245 München (DE); Nickels, Thomas, 81541 München (DE); Hintereder, Jürgen, Dipl.-Ing. (FH), 85586 Poing (DE); Neukam, Michael, Dipl-Ing. (TU), 82110 Germering (DE); Lutsch, Helmar, Dipl.-Ing., 81927 München (DE)

(56) Entgegenhaltungen:
- EP-A- 0 636 531
- EP-A- 0 678 405
- DE-A- 4 226 500
- DE-A- 19 624 242
- US-A- 4 168 086
- US-A- 5 641 181

## Beschreibung

Die Erfindung betrifft ein Fahrgestell eines schweren Nutzfahrzeugs mit Merkmalen gemäß dem Oberbegriff des Anspruchs 1.

Die Erfindung geht aus von der DE 196 24 242 A1. Aus dieser ist ein Nutzfahrzeug mit einer Starrachse bekannt, über deren Starrachskörper sich ein von vorne gesehen U-förmiger Querträger erstreckt, der die beiden Rahmen-Längsträger miteinander verbindet und außerdem mit seiner mittleren Quertraverse dachbildend auch einen darunter verlaufenden Panhardstab überbrückt. Mit seinen äußeren Enden ist der Querträger direkt an den beiden Rahmen-Längsträgern angeschlossen. Der Starrachskörper ist des weiteren in herkömmlicher Weise über je Achsseite einen Luftfederbalg und einen benachbart neben diesem angeordneten Stoßdämpfer gegenüber dem Fahrzeug-Rahmen abgefedert sowie über mehrere Längsträger an letzterem angelenkt.

Des weiteren ist aus der EP 0636531 A2 die Hinterachsaufhängung eines Personenkraftwagen bekannt. Dabei ist eine Starrachse über je Achsseite ein Dämpferbein gegenüber einem Bodenblechteil abgestützt. Außerdem ist zur Querführung der Starrachse ein Panhardstab vorgesehen.

Ferner offenbart die DE 21 42 079 A1 eine luft- oder schraubengefederte Verbundlenker-Vorderachse mit einem Starrachskörper und zwei fest mit diesem verbundenen Längslenkern. Zur Querführung ist ein Panhardstab vorgesehen, der einenendes an einem Längslenker und andernendes an der gefederten Masse des Fahrzeugs angelenkt ist.

Demgegenüber besteht die Aufgabe der Erfindung darin, bei einem Fahrgestell eines schweren Nutzfahrzeuges der gattungsgemäßen Art die Starrachse einschließlich deren Aufhängung, Anlenkung und Führung auf möglichst platzsparende Weise und so darzustellen, dass sich ein in Verbindung mit Starrachsen bisher bei schweren Nutzfahrzeugen nicht erreichter Fahr- und Federungskomfort und außerdem im Bereich der Starrachse ein hinreichend großer Freiraum über deren Mittelabschnitt sowie stabile Rahmenverhältnisse erzielen lassen.

Diese Aufgabe ist bei einem Fahrgestell der gattungsgemäßen Art erfindungsgemäß durch die im Anspruch 1 angegebenen Merkmale gelöst.

Vorteilhafte Ausgestaltungen und Weiterbildungen sowie Anwendungen der Erfindung sind in den Unteransprüchen angegeben.

Aufgrund der erfindungsgemäßen Ausgestaltung der Starrachse, ferner dem Vorsehen des U-förmigen Querträgers und des Panhardstabes in entsprechender Zuordnung zum Starrachskörper-Längslenker-Verbund ergibt sich im Bereich der Starrachse ein gut stabilisierter Rahmenabschnitt sowie ein großer Freiraum zwischen den Rahmen-Längsträgem und über dem unteren Querträger-Querabschnitt, was dort den ungehinderten Einbau anderer Fahrzeugteile, wie eines Antriebsaggregates in einem Lastkraftwagen oder das Vorsehen eines breiten Mittelganges in einem Omnibus, ermöglicht. Das feste Anschließen zweier Längslenker am Starrachskörper ergibt einen Bauteilverbund, der auf einfache Weise an rahmenfesten Lagerböcken angelenkbar ist und hinsichtlich der Federungs- und Dämpfungsorgane verschiedene Ausführungsvarianten zulässt. Besonders vorteilhaft kommt dies zum Tragen, weil die Starrachse erfindungsgemäß nach Art einer selbststabilisierenden Verbundlenkerachse ausgebildet ist und hierfür dem betreffenden Starrachskörper-Längslenker-Verbund auch die Funktion eines das Wanken des schweren Nutzfahrzeuges begrenzenden Stabilisators aufgeprägt ist. Dieser Starrachskörper-Längslenker-Verbund ermöglicht es außerdem, dass zur Querführung der Starrachse ein Panhardstab genügt, für den erfindungsgemäß die achsseitige Anschlussstelle am Starrachskörper-Längslenker-Verbund und die rahmenseitige Anschlussstelle am U-förmigen Querträger vorgesehen ist. Dessen Vorteil liegt außerdem darin, dass er mit seinem unteren Querabschnitt, mit dem er sich über dem Starrachskörper und dem Panhardstab erstreckt, auch seine beiden Seitenabschnitte so stabil miteinander verbunden werden können, dass hierüber auch eine stabile Verbindung der Rahmen-Längsträger erzielbar ist. Mit besonderem Vorteil ist es möglich, die Seitenabschnitte des U-förmigen Querträgers durch Federbeinhalter darzustellen und außerdem Federbeine mit einer Luft- oder Schraubenfeder und hierzu koaxialem Stoßdämpfer als Feder-/Dämpfer-Organe zu verwenden, was ebenso wie die Verbundlenkerachse bei einem schweren Nutzfahrzeug ein Novum darstellt. Das Anschließen dieser Federbeine jeweils oben an einem solchen Federbeinhalter und unten an einer Anlenkstelle weit außen am Starrachskörper der Verbundlenkerachse erbringt im Fahrbetrieb einen sehr hohen Fahr- und Federungskomfort.

Nachstehend ist die Erfindung anhand der Zeichnung und darin aufgezeigter Beispiele in Verbindung mit einer nach Art einer selbststabilisierenden Verbundlenkerachse konstruierten Starrachse näher erläutert. In der Zeichnung zeigen:

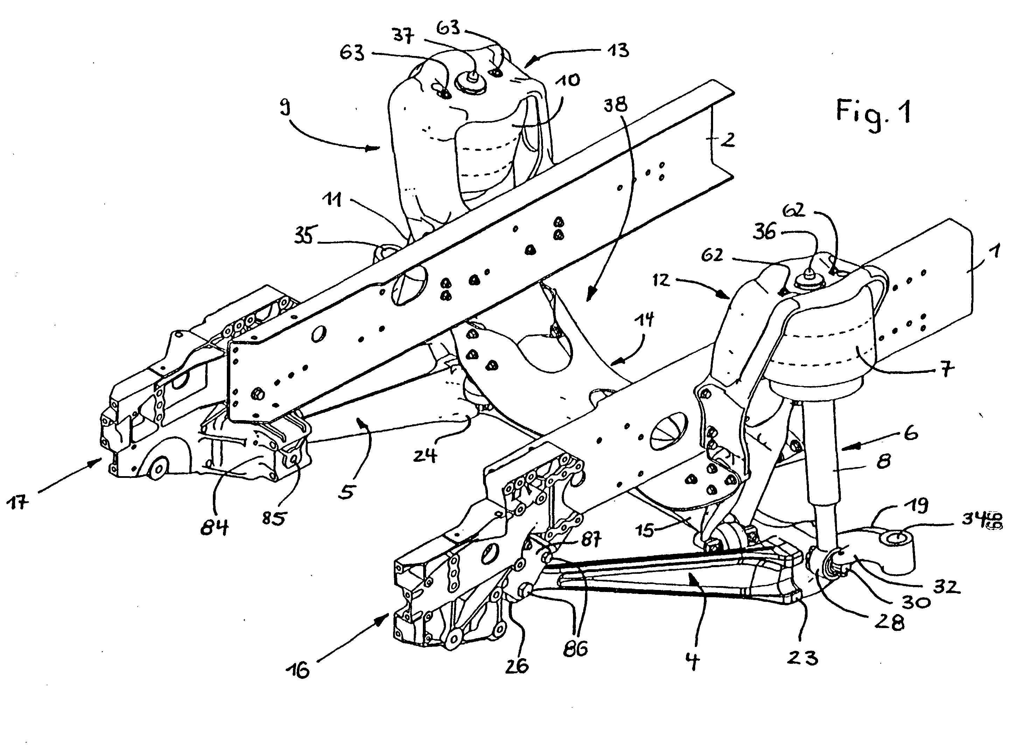

- Fig. 1: perspektivisch den vorderen Endbereich des Fahrgestells eines Frontlenker-Lastkraftwagen (als Beispiel eines schweren Nutzfahrzeuges) mit der erfindungsgemäßen Starrachse samt Aufhängung, Federung und Dämpfung,

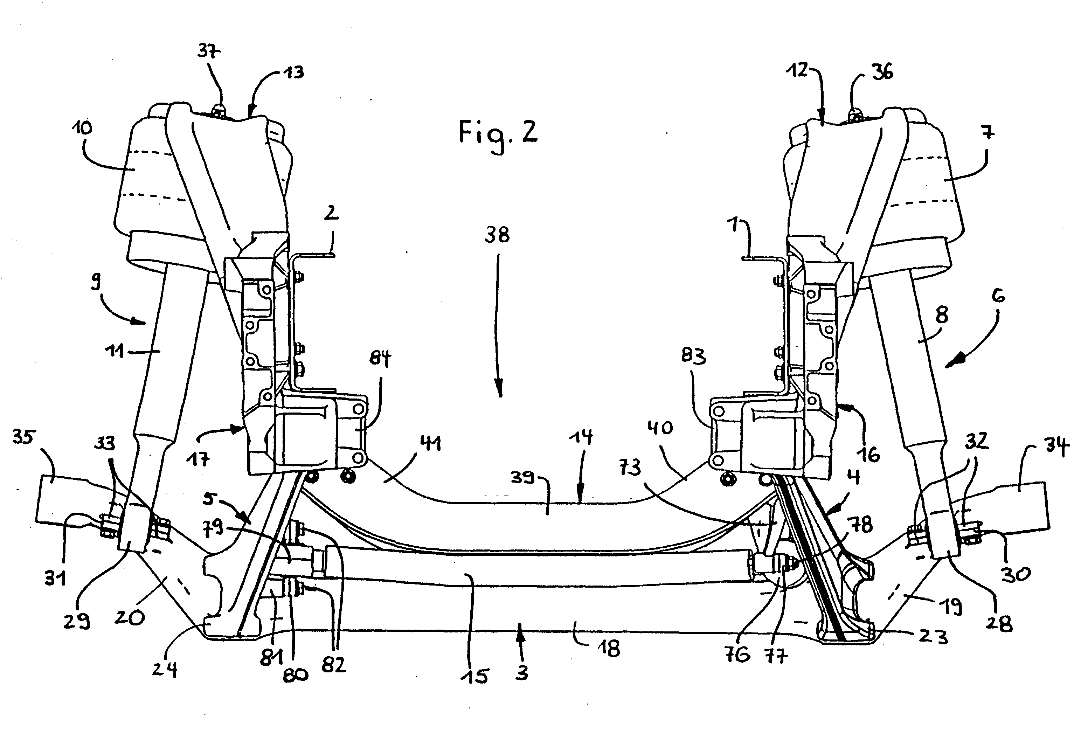

- Fig. 2: den Fahrgestellbereich gemäß Fig. 1 in Ansicht von vorn,

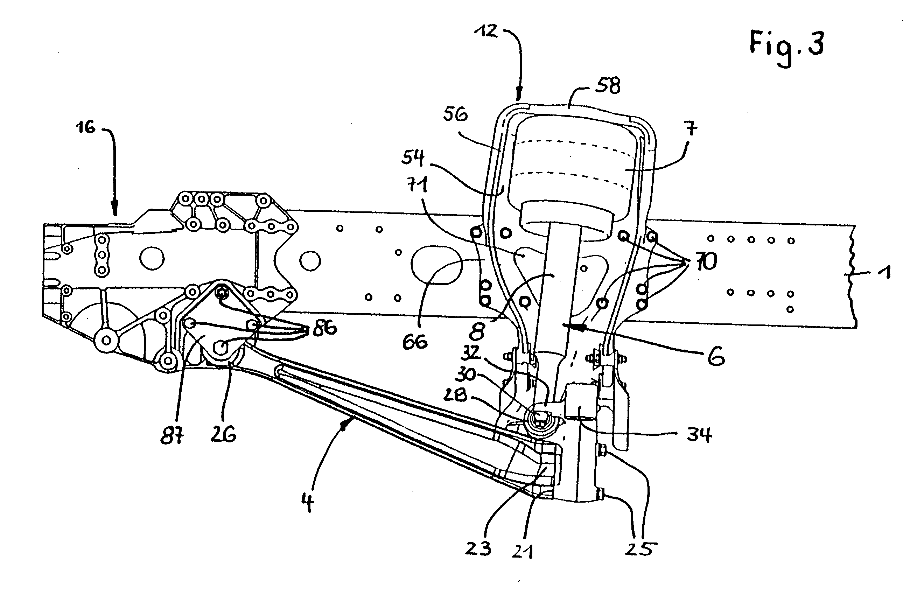

- Fig. 3: den Fahrgestellbereich gemäß Fig. 1 in Seitenansicht,

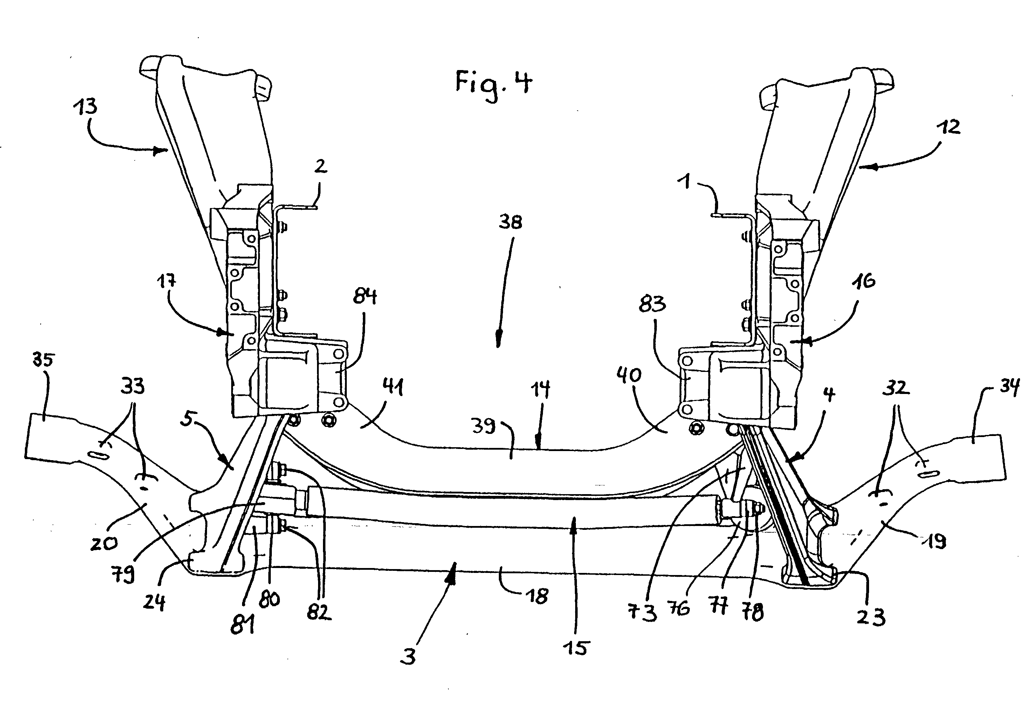

- Fig. 4: die Darstellung gemäß Fig. 2 ohne Federbeine,

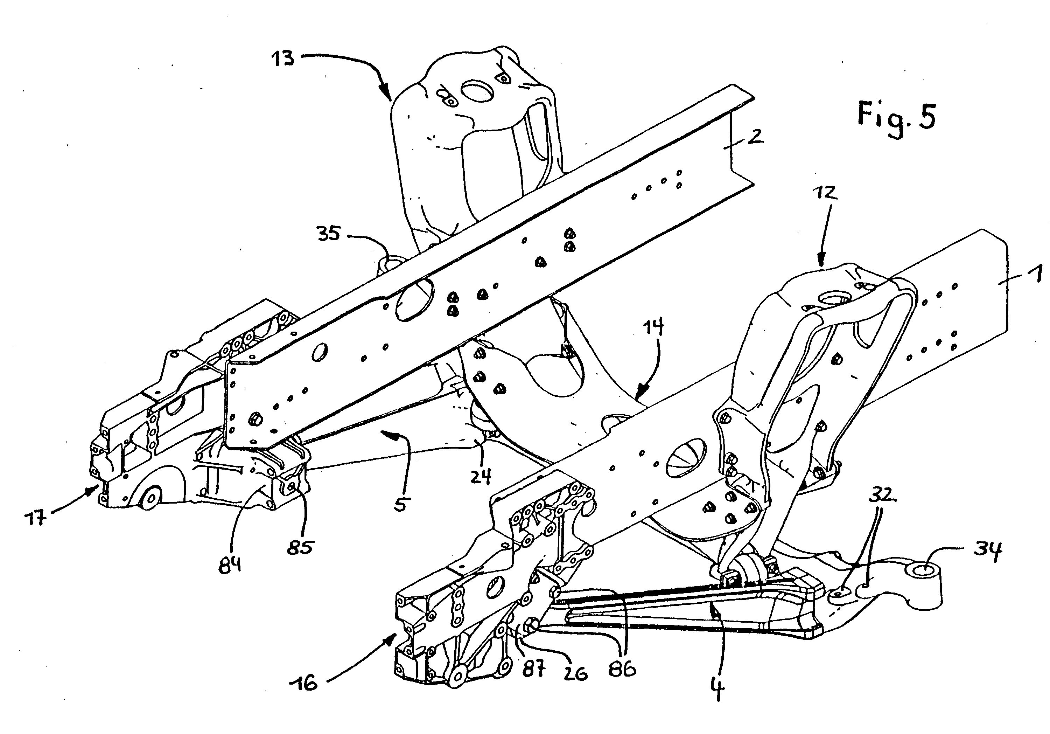

- Fig. 5: die Darstellung gemäß Fig. 1 ohne Federbeine,

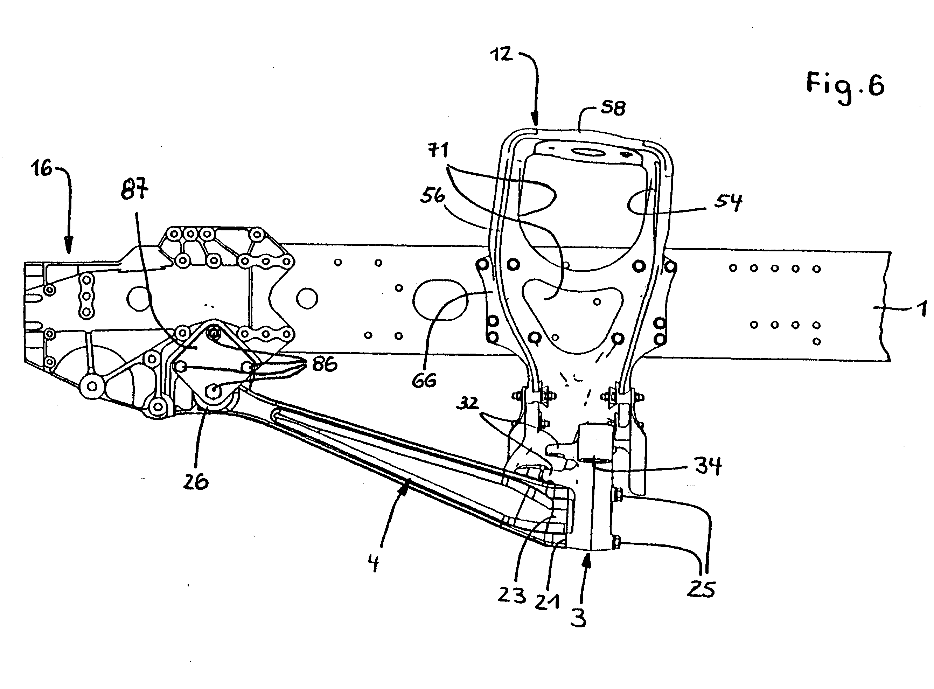

- Fig. 6: die Darstellung gemäß Fig. 3 ohne Federbeine,

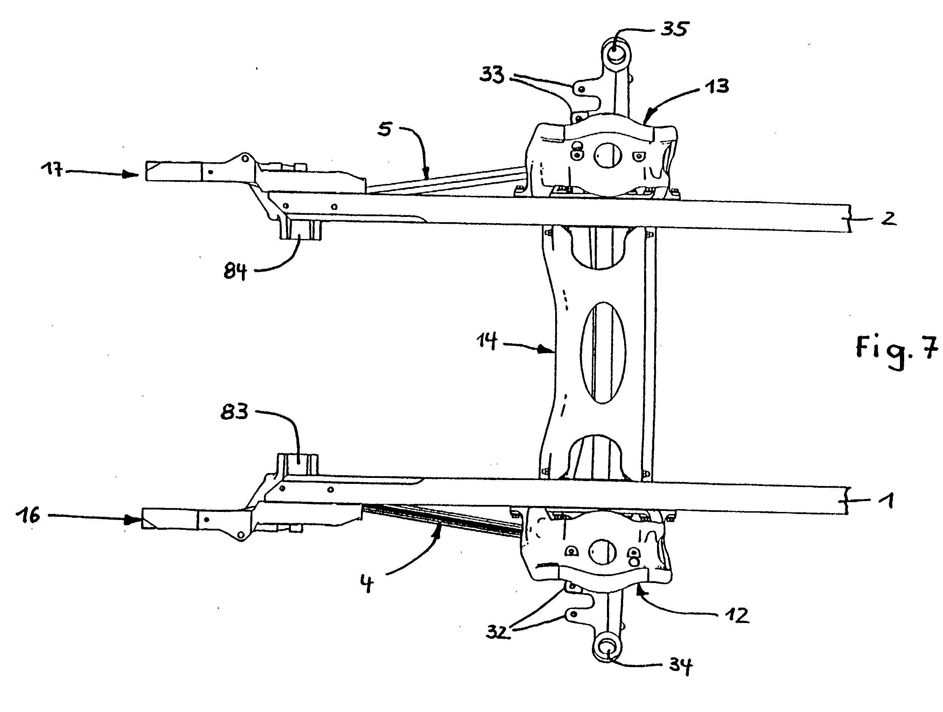

- Fig. 7: die Darstellung gemäß Fig. 4 in Draufsicht ohne Panhardstab,

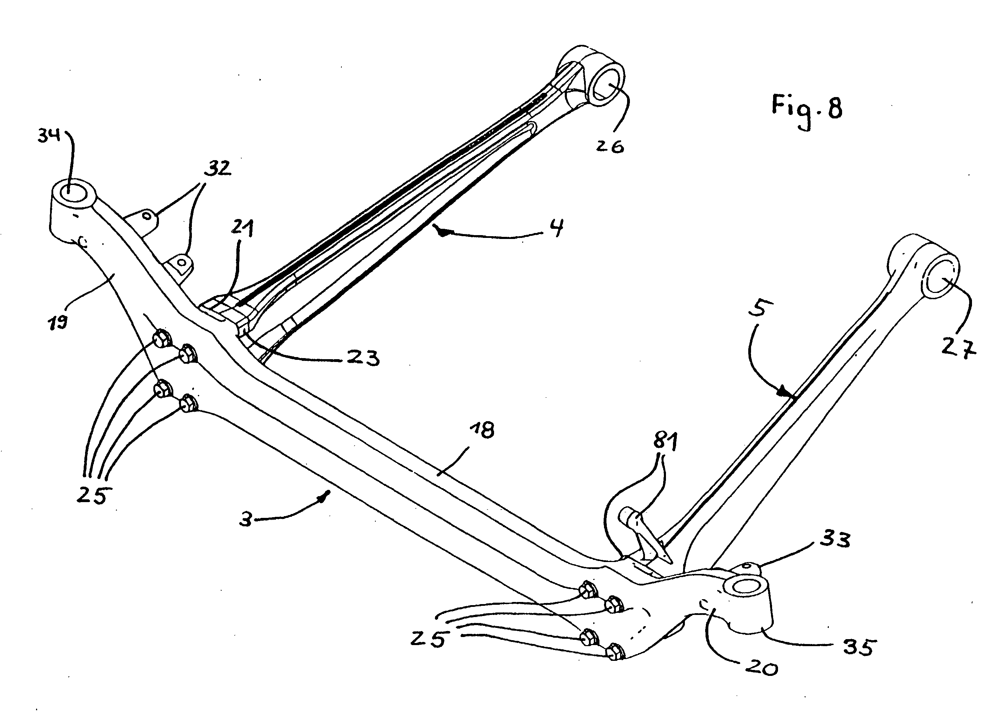

- Fig. 8: den Starrachskörper-Längslenker-Verbund aus den Fig. 1 bis 7 in perspektivischer Alleindarstellung,

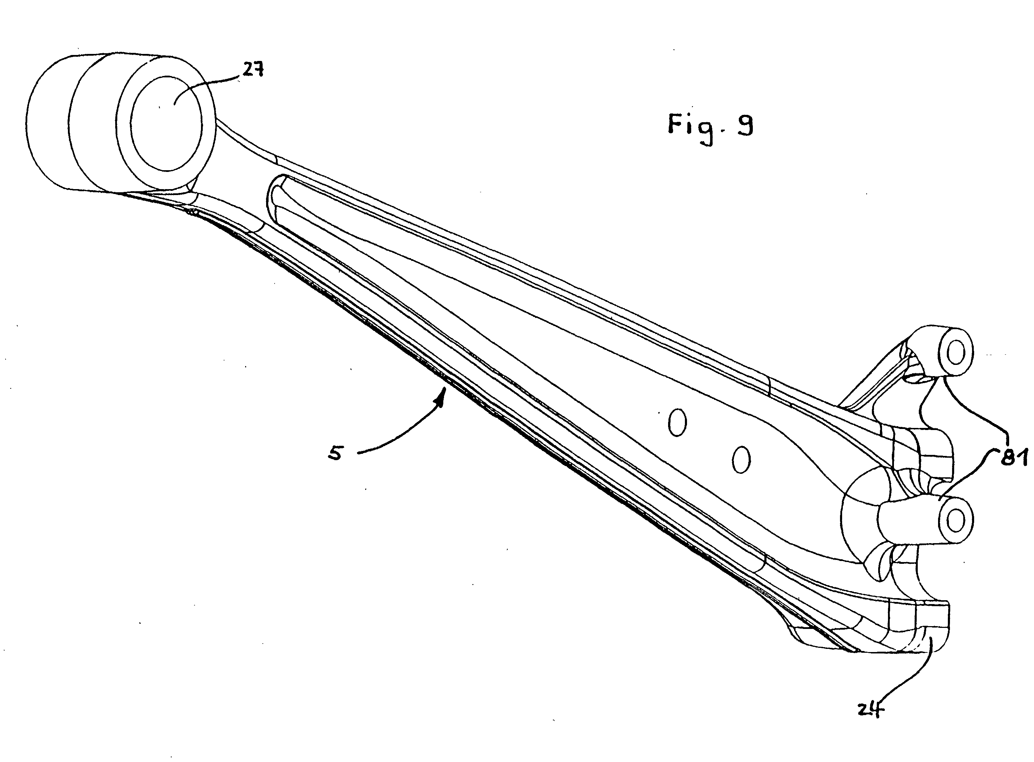

- Fig. 9: einen Längslenker aus dem Starrachskörper-Längslenker-Verbund gemäß Fig. 8 in perspektivischer Alleindarstellung,

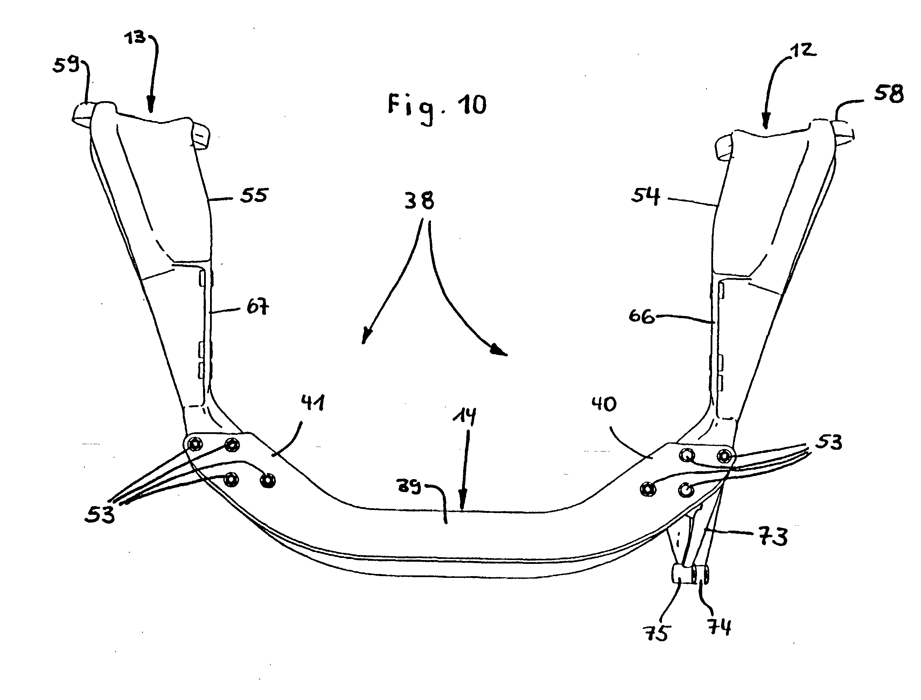

- Fig. 10: eine Ausführungsform des erfindungsgemäßen U-förmigen Querträger in vorderansichtiger Alleindarstellung,

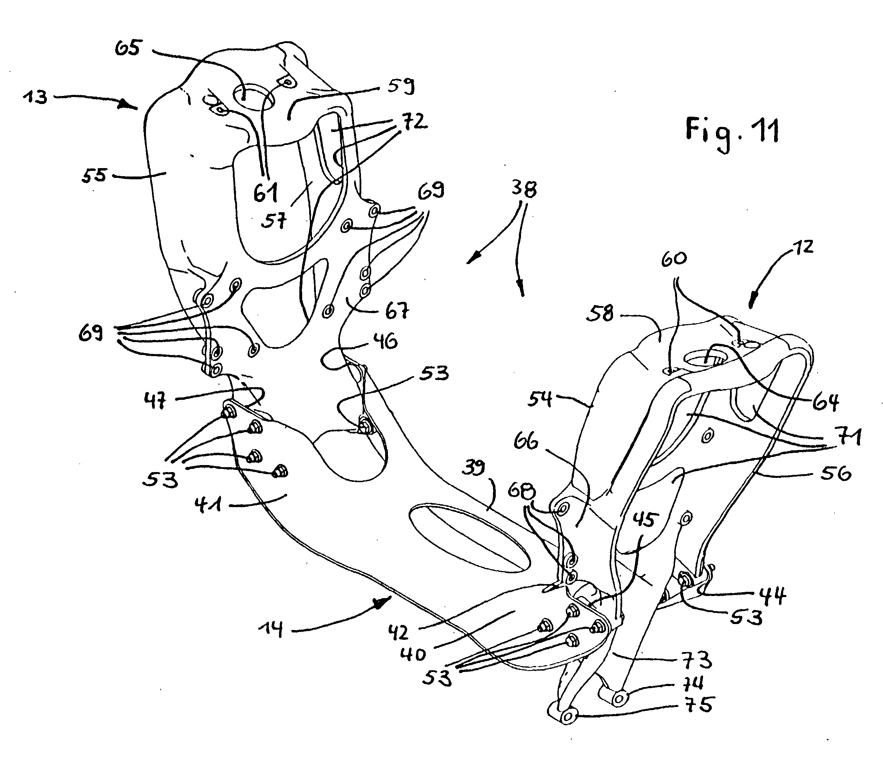

- Fig. 11: die Ausführungsform des erfindungsgemäßen Querträgers von Fig. 10 in perspektivischer Alleindarstellung,

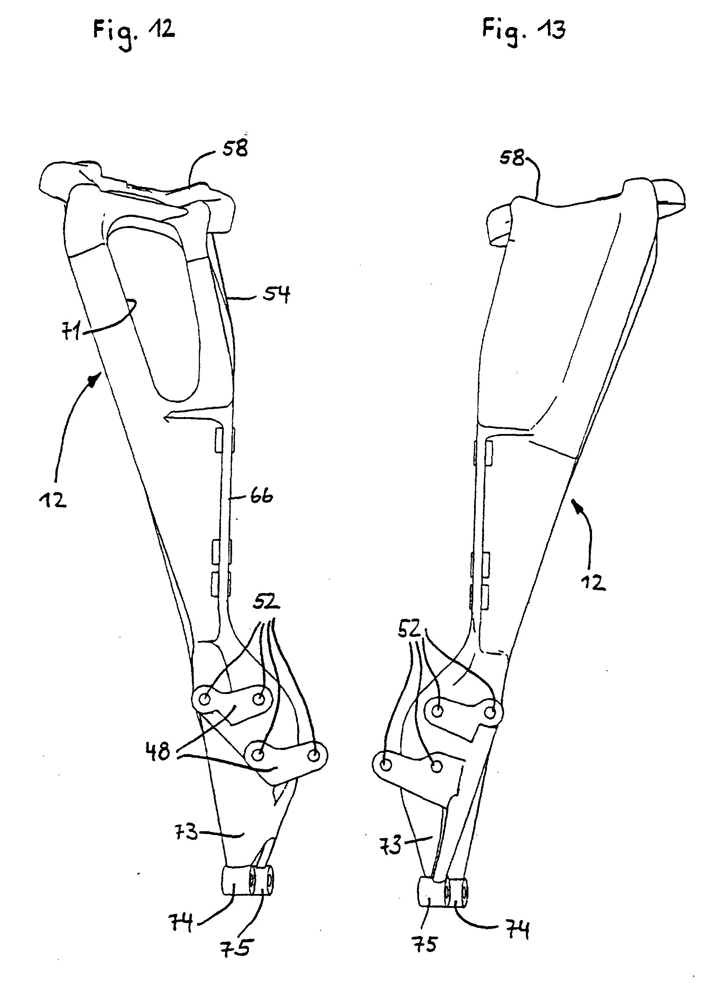

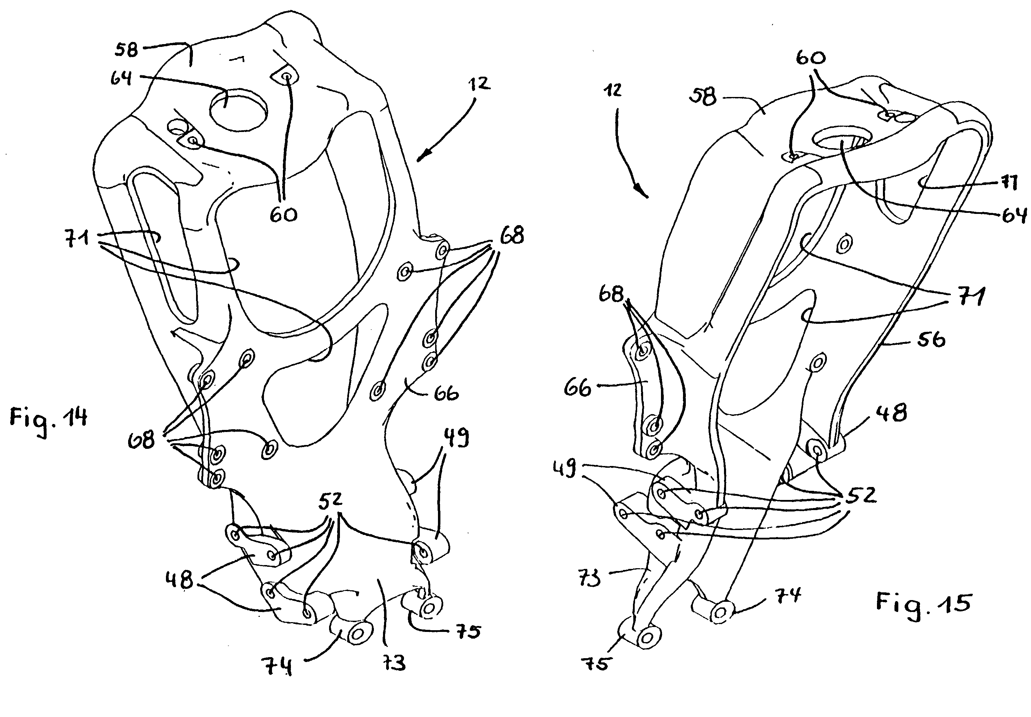

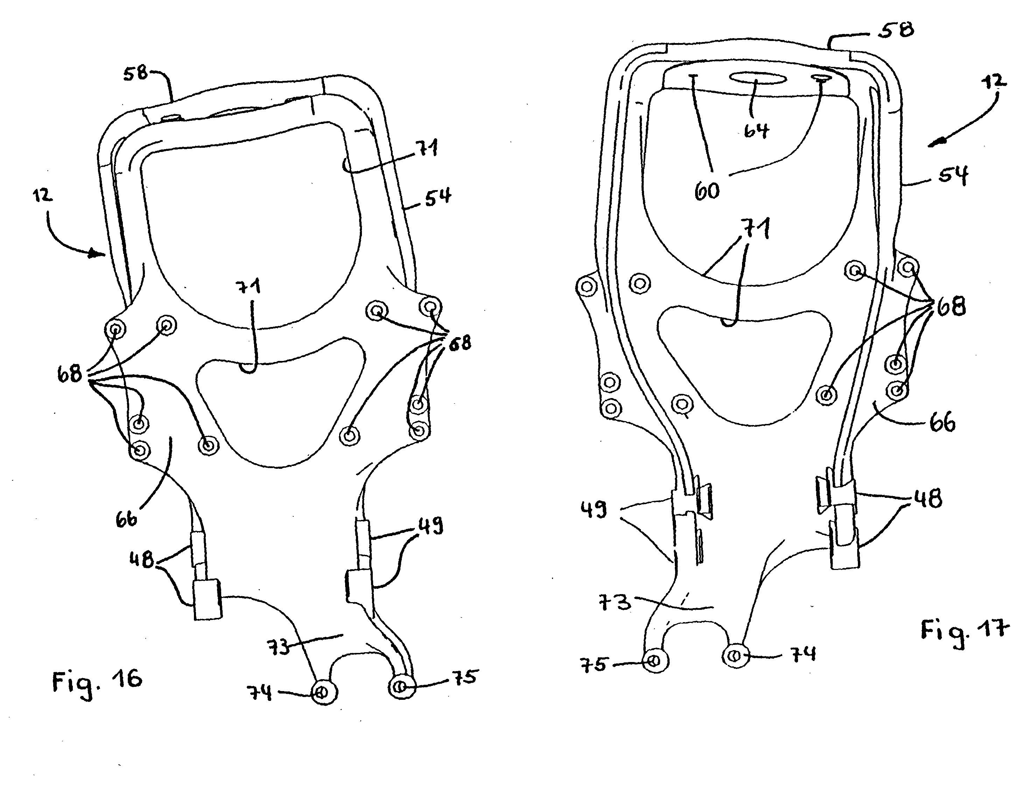

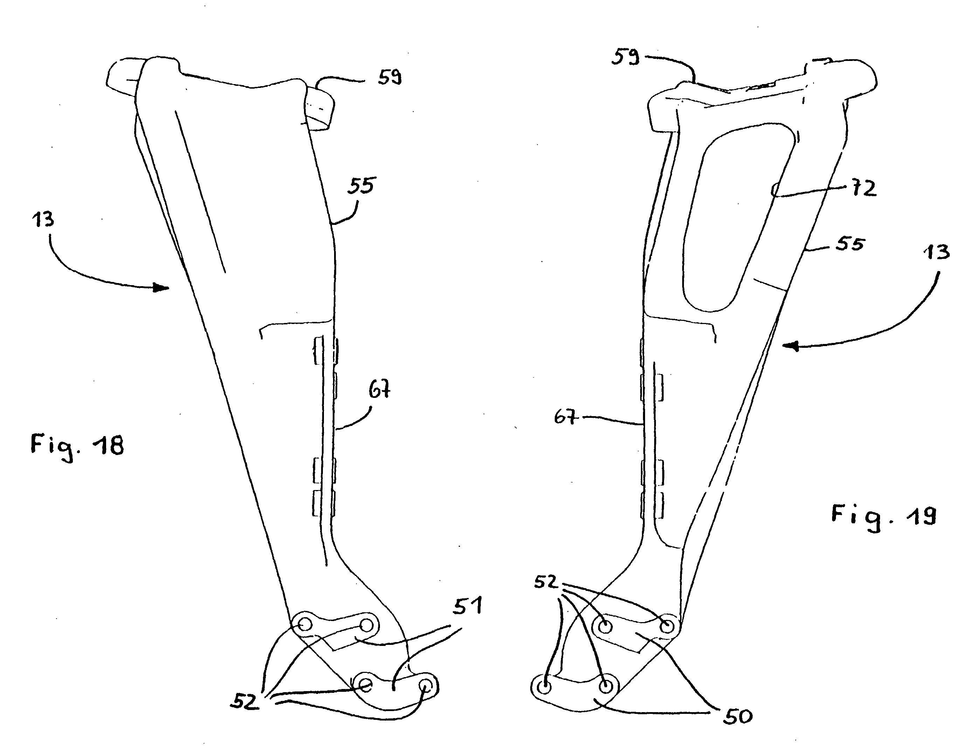

- Fig. 12 bis 17: je eine unterschiedliche Ansicht eines der beiden durch einen Federbeinhalter gebildeten Seitenabschnitte des erfindungsgemäßen Querträgers,

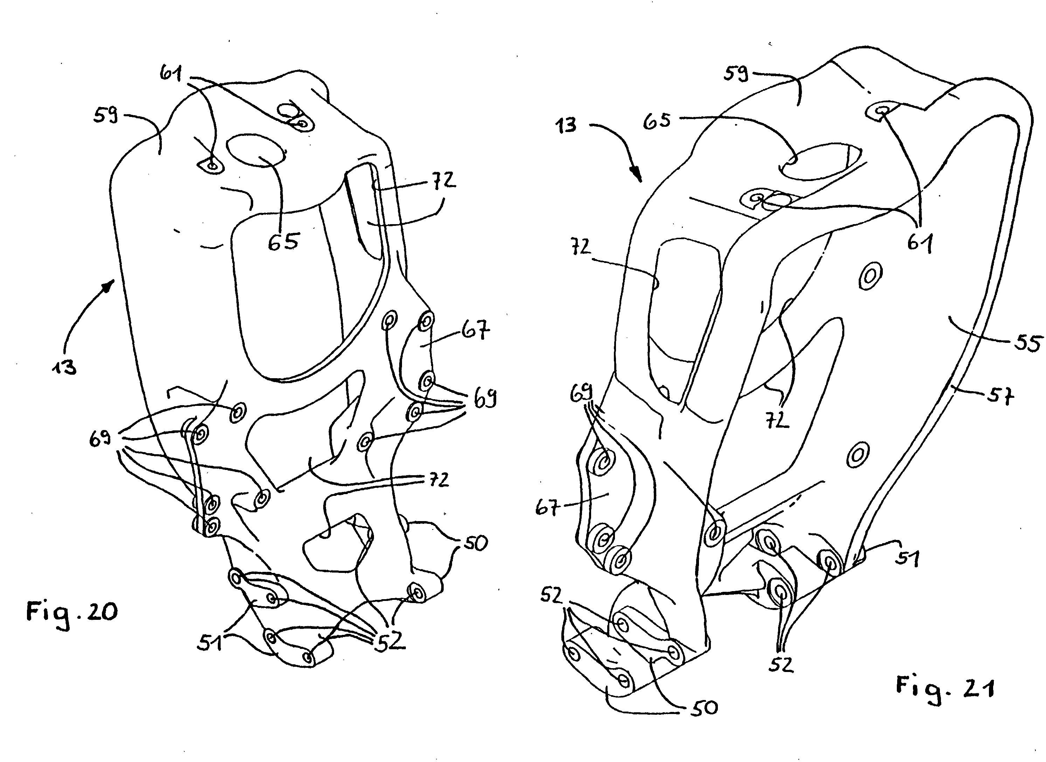

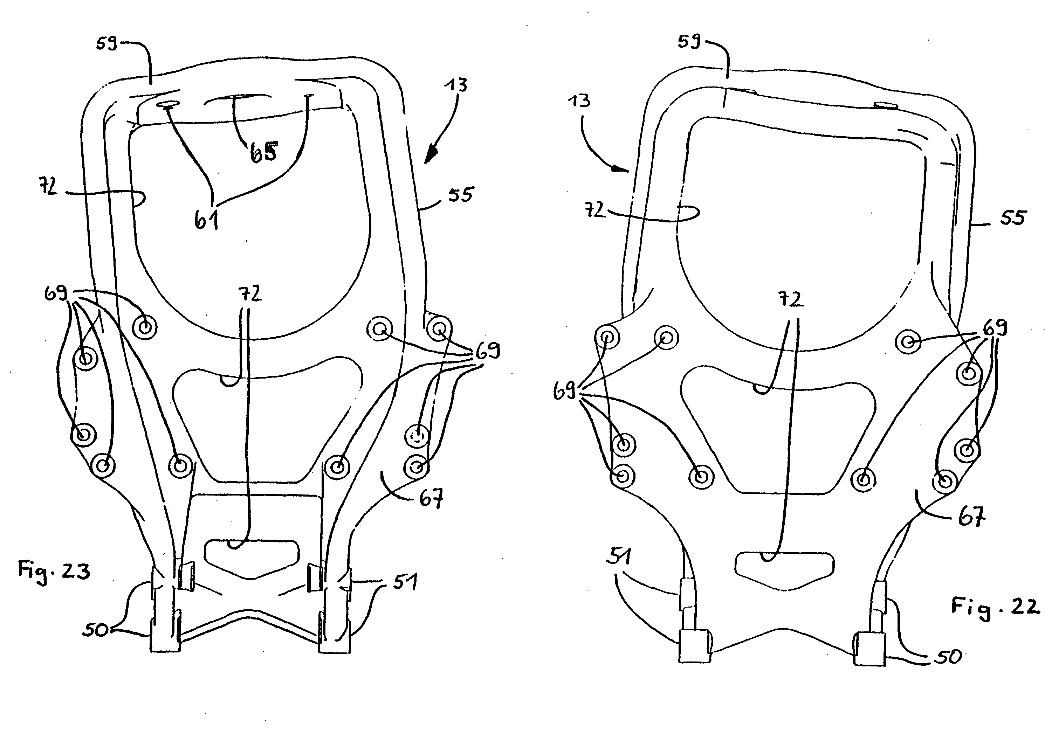

- Fig. 18 bis 23: je eine unterschiedliche Ansicht des anderen der beiden durch einen Federbeinhalter gebildeten Seitenabschnitte des erfindungsgemäßen Querträgers.

Das erfindungsgemäße Fahrgestell ist Bestandteil eines schweren Nutzfahrzeuges, bei dem es sich um einen Lastkraftwagen, insbesondere der Frontlenker-Bauart mit kippbarem Fahrerhaus, mit An- und Aufbauten der verschiedensten Art, auch solche für Spezialeinsatzzwecke, eine Sattelzugmaschine oder um einen Omnibus handeln kann. Die Erfindung kann generell in Verbindung mit einer Starrachse zur Anwendung kommen, bei der es sich um eine Vorderachse, Nachlaufachse oder Vorlaufachse mit lenkbaren oder nicht-lenkbaren Rädern handeln kann. In der Zeichnung ist die erfindungsgemäße Starrachse als Vorderachse aufgezeigt. Vom Fahrgestell sind in der Zeichnung als Teile des Rahmens dessen beide Längsträger mit 1 und 2 bezeichnet. Die dargestellte Starrachse besteht einschließlich aller Aufhängungs-, Federungs- und Dämpfungsorgane aus folgenden Hauptteilen, nämlich einem Starrachskörper 3, einem linken Längslenker 4 und rechten Längslenker 5, einem linken Federbein 6 mit Luft- oder Schraubenfeder 7 und hierzu koaxialem Stoßdämpfer 8, einem rechten Federbein 9 mit Luft- oder Schraubenfeder 10 und hierzu koaxialem Stoßdämpfer 11, einem von vorne gesehen U-förmigen Querträger 38 und einem Panhardstab 15.

In der Zeichnung sind ein linker Multifunktionslagerschild mit 16 und ein rechter Multifunktionslagerschild mit 17 bezeichnet. Jeder derselben ist außen an einem Rahmen-Längsträger 1 bzw. 2 befestigt und dient zur rahmenseitigen Anlenkung der erfindungsgemäßen Starrachse und im vorliegenden Beispiel darüber hinaus auch als Halte-, Stütz- und Lagerorgan für eine größere Anzahl anzubauender Fahrzeugteile.

Der Starrachskörper 3 weist einen geraden Mittelbereich 18 und beiderseits desselben anschließende, im dargestellten Beispiel hochgekröpfte Endabschnitte 19, 20 auf. Am Übergangsbereich zwischen geradem Mittelbereich 18 und jedem Endabschnitt 19, 20 ist stirnseitig - im Fall einer gezogenen Achse vorne und im Fall einer geschobenen Achse hinten - am Starrachskörper 3 jeweils ein Ansatz bzw. Vorsprung mit nachbearbeiteter Anlagefläche 21 bzw. 22 mitangeformt, an der jeweils einer der beiden Längslenker 4, 5 mit seinem achskörperseitigen Fuß 23 bzw. 24 kraftschlüssig und gegebenenfalls auch noch formschlüssig angeflanscht ist. Die Anlagefläche 21 bzw. 22 erstreckt sich dabei mit großer Breite vorzugsweise über die ganze am Starrachskörper 3 verfügbare Höhe, um am Starrachskörper 3 eine möglichst große Anschlußbasis für den jeweiligen Längslenker 4 bzw. 5 bereitzustellen. Zur Befestigung sind je Längslenker 4, 5 mehrere Schrauben 25, z. B. je 4 Stück, vorgesehen, die von der gegenüberliegenden Seite des Starrachskörpers 3 her durch in diesem ausgebildete Durchgangsbohrungen hindurchgeführt sowie in hierzu fluchtende Sacklochgewindebohrungen im jeweiligen Längslenker-Fuß 23 bzw. 24 eingeschraubt sind, und zwar mit einer hohen Vorspannkraft und so gesichert, daß der Starrachskörper-Längslenker-Verbund bei allen im Fahrbetrieb auftretenden Belastungen einwandfrei erhalten bleibt. Diese Bauweise läßt es in vorteilhafter Weise zu, die Starrachse nach Art einer selbststabilisierenden Verbundlenkerachse zu gestalten. Hierzu wird die Funktion eines das Wanken des Nutzfahrzeuges begrenzenden Stabilisators dem Starrachskörper-Längslenker-Verbund 3, 4, 5 aufgeprägt. Dieser Funktion und Zweckbestimmung gehorchend ist daher der Starrachskörper 3 in seinem geraden Mittelbereich 18 zwischen den beiden an ihm angeschlossenen Längslenkern 4, 5 definiert torsionsfähig ausgebildet. Der je nach Anwendungsfall durchgehend gerade oder - wie in der Zeichnung dargestellt - nach Art einer gekröpften Faustachse ausgebildete Starrachskörper 3 wird durch Schmieden oder Gießen hergestellt und anschließend an bestimmten Stellen spanabhebend nach- bzw. endbearbeitet. Das Profil und die Größe des Querschnitts seines Mittelbereiches 18 werden im Sinne der gewünschten Torsionsfähigkeit auf den jeweiligen fahrzeugspezifischen Anwendungsfall abgestimmt. Ebenso wie der Starrachskörper 3 sind auch die an ihm angeschlossenen Längslenker 4, 5 in die Stabilisatorfunktion eingebunden und dementsprechend ausgebildet. Sie sind jeweils als Gußteil, gegebenenfalls auch Schmiedeteil hergestellt und anschließend an bestimmten Stellen spanabhebend nach- bzw. endbearbeitet, ferner in der Vertikalen vergleichsweise biegesteif, um ihre Längsachse aber begrenzt tordierbar ausgebildet. Generell sind die beiden Längslenker 4, 5 in diesem Fall hinsichtlich ihrer Biegesteifigkeit und Torsionsfähigkeit auf den Gesamtstabilisierungseffekt in Verbindung mit dem torsionsfähigen Starrachskörper 3 abgestimmt, und zwar durch entsprechende Bemessung und Formgebung ihrer Querschnitte. Im dargestellten Beispiel weist jeder der beiden gleich langen Längslenker 4, 5 zwischen seinem Fuß 23 bzw. 24 und einem andernendes vorhandenen Lagerauge 26 bzw. 27 einen stabförmigen Bereich mit einem sich über die Länge größenmäßig ändernden, zu dem Lagerauge 26 bzw. 27 hin kleiner werdenden Querschnitt auf. Zu dem besagten Gesamtstabilisierungseffekt trägt außerdem bei, daß die beiden Längslenker 4, 5 zur Fahrzeuglängsmittelachse spiegelsymmetrisch und - von oben betrachtet - derart gepfeilt zueinander stehend am Starrachskörper 3 angeschlossen sind, daß sie eine Trapezfläche einschließen, wobei der Abstand ihrer Lageraugen 26 bzw. 27, mit denen sie jeweils an den rahmenfest angebrachten Multifunktionslagerschilden 16 bzw. 17 angelenkt sind, kleiner ist als der Abstand ihrer achskörperseitigen Füße 23 bzw. 24. Wenn die erfindungsgemäße Starrachse in das Fahrzeug eingebaut ist, verlaufen die beiden Längslenker 4, 5 - von der Seite her betrachtet - vom Starrachskörper 3 ausgehend schräg nach oben gerichtet zu den rahmenseitigen Multifunktionslagerschilden 16 bzw. 17 hin.

Der erfindungsgemäße Querträger 38 weist zwei Seitenabschnitte und einen unteren Querabschnitt auf, mit dem er den Starrachskörper 3 und den Panhardstab 15 oben mit geringem Abstand überbrückt. Der Querträger 38 verbindet die beiden Rahmen-Längsträger 1, 2 stabilisierend miteinander und ist an diesen mit seinen Seitenabschnitten befestigt.

Im dargestellten Ausführungsbeispiel sind die beiden Seitenabschnitte des U-förmigen Querträgers 38 durch jeweils einen Federbeinhalter 12, 13 und der untere Querabschnitt des Querträgers 38 durch eine Quertraverse 14 gebildet. Die beiden Federbeinhalter 12, 13 dienen zur Halterung und Abstützung jeweils eines je Achsseite vorgesehenen Federbeines 6 bzw. 9. Durch Verwendung solcher Federbeine 6, 9 läßt sich im Fahrbetrieb ein sehr hoher Fahr- und Federungskomfort erzielen. Dieser erreicht ein Optimum, wenn die größtmögliche Federspur festgelegt ist, das heißt, jedes der beiden Federbeine 6 bzw. 9 an seinem unteren Ende z. B. über ein in ein dortiges Lagerauge 28 bzw. 29 eingebautes Pratzengelenk 30 bzw. 31 an einer achskörperfesten Lagerstelle angelenkt ist, die räumlich im Bereich zwischen einem Längslenker 4 bzw. 5 und einem benachbarten achskörperendigen Radträger-Anschlußkopf 34 bzw. 35 so weit wie möglich zu letzterem hin gerückt angeordnet und durch einen am Starrachskörper 3 angebauten oder mitangeformten maulartigen Bock 32 bzw. 33 gebildet ist Zu diesem hohen Fahr- und Federungskomfort trägt außerdem bei, daß die beiden Federbeine 6, 9 - von vorne gesehen - gepfeilt zueinander eingebaut sind, so, daß ihre oberen Enden 36 bzw. 37 weniger weit voneinander beabstandet sind als ihre untenendigen Lageraugen 28 bzw. 29, und daß jedes Federbein 6, 9 von der Seite her gesehen entweder vertikal steht oder - je nach dem, ob es sich um eine geschobene oder wie dargestellt gezogene Starrachse handelt - leicht nach vorn oder hinten geneigt angeordnet ist.

Innerhalb des U-förmigen Querträgers 38 ist im dargestellten Beispiel die Quertraverse 14 durch ein im Querschnitt hutförmiges Blechpreßteil, gegebenenfalls auch Schmiede- oder Gußteil, gebildet, das einen geraden Mittelabschnitt 39 und beiderseits desselben je einen schräg hochgezogenen Endabschnitt 40 bzw. 41 aufweist. Dessen äußere Enden sind nach Art eines Maules ausgebildet, mit dem der anzuschließende Federbeinhalter 12 bzw. 13 außen übergriffen wird. Jedes Maul wird durch einen Ausschnitt 42 bzw. 43 im Obergurt der Quertraverse 14 und beiderseits jedes Ausschnitts 42 bzw. 43 verbleibende Wangen 44, 45 bzw. 46, 47 gebildet, denen am jeweiligen Federbeinhalter 12 bzw. 13 vorn und hinten zugehörige Anlageflächen 48, 49 bzw. 50, 51 zugeordnet sind. Im Bereich dieser Anlageflächen 48, 49 bzw. 50, 51 ist die Quertraverse 14 mit ihren Wangen 44, 45 bzw. 46, 47 abgestützt und dort durch entsprechende Bohrungen bzw. Löcher 52 durchdringende Schrauben 53 mit dem jeweiligen Federbeinhalter 12 bzw. 13 fest verbunden. In der Mitte seines Obergurtes kann die Quertraverse 14 zur Gewichtsreduzierung einen oder mehrere Durchbrüche aufweisen.

Die beiden, im dargestellten Beispiel die Seitenabschnitte des U-förmigen Querträgers 38 bildenden Federbeinhalter 12 bzw. 13 sind vorzugsweise jeweils durch ein Stahlgußteil realisiert, das nach dem Abguß an erforderlichen Stellen spanabhebend nach - bzw. endbearbeitet wird. Jeder Federbeinhalter 12 bzw. 13 ist dabei, was seine Form anbelangt, zumindest in seinem oberen Bereich nach Art einer nach außen offenen Halbschale 54 bzw. 55 ausgebildet, von deren Begrenzungswand 56 bzw. 57 das zugehörige Federbein 6 bzw. 9 im Bereich seiner Luft- oder Schraubenfeder 7 bzw. 10 radial außen mit geringem Abstand von innen her partiell überdeckt wird und an deren Kopfplatte 58 bzw. 59 das jeweilige Federbein 6 bzw. 9 obenendig abgestützt und mittels je zwei Löcher 60 bzw. 61 durchdringenden Verschraubungen62 bzw. 63 befestigt ist. Ein Zentralloch 64 bzw. 65 in der Federbein-Kopfplatte 58 bzw. 59 dient zur Zentrierung des jeweiligen Federbeines 12 bzw. 13 und freien Durchtritt von dessen oberem Ende 36 bzw. 37. Etwa in seinem mittleren Höhen-Bereich weist jeder Federbeinhalter 12 bzw. 13 außenseitig an der Halbschale 54 bzw. 55 anschließend einen Anschlußflansch 66 bzw. 67 mit mehreren Schraubenlöchem 68 bzw. 69 auf. Mit den jeweiligen Anschlußflansch 66 bzw. 67, der etwa im Schubmittelpunkt gegeben ist, ist jeder der beiden Federbeinhalter 12 bzw. 13 außen am zugehörigen Rahmen-Längsträger 1 bzw. 2 angeflanscht und dort jeweils mittels mehrerer die Löcher 68 bzw. 69 und hierzu längsträgerintern fluchtende Löcher durchdringender Schrauben 70 mit zugehörigen Muttern befestigt. Verschiedene Durchbrüche 71 bzw. 72 in den Federbeinhaltern 12 bzw. 13 dienen zu deren Gewichtsreduzierung.

Die rahmenseitige Anschlußstelle für das eine Ende des Panhardstabes 15 ist erfindungsgemäß am Querträger 38 vorgesehen. Im dargestellten Beispiel ist hierzu einem der beiden Federbeinhalter 12 bzw. 13 über seine eigentliche Funktion hinaus eine weitere Funktion aufgeprägt, nämlich jene, das Abstütz-, Halte- und Anlenkorgan für das eine Ende des Panhardstabes 15 zu bilden. Zu diesem Zweck ist der betreffende Federbeinhalter 12 bzw. 13 nach unten durch ein Lagerschild 73 verlängert, an dessen unterem Ende ein Maul und beiderseits desselben je ein Lagerauge 74 bzw. 75 ausgebildet sind, an denen der Panhardstab 15 über ein in seinen einenendigen Lagerauge 76 eingebautes Pratzengelenk 77 abgestützt und mittels Schrauben 78 befestigt ist.

Die achsseitige Anlenkstelle für das gegenüberliegende andere Ende des Panhardstabes 15 ist erfindungsgemäß am Starrachskörper-Längslenker-Verbund 3, 4, 5 vorgesehen. Hierzu weist der Panhardstab 15 z. B. ein in das dortige Lagerauge 79 eingebautes Pratzengelenk 80 auf, mit dem er an geeigneter Stelle des Starrachskörper-Längslenker-Verbundes 3, 4, 5 angelenkt ist. Für den Fall der Anlenkung am Starrachskörper 3 ist an diesem ein Anschlußbock entweder angebaut oder mitangeformt, an dem eine entsprechende Anlagefläche und Gewindebohrungen für die Anschraubung des Pratzengelenkes 80 angearbeitet sind. Im dargestellten Beispiel ist als Anlenkstelle einer der beiden Längslenker 4 bzw. 5 gewählt, an dem ein seitlich nach innen vorspringender maulartiger Lagerbock 81 angebaut oder - wie dargestellt - mitangeformt ist, der eine äußere stirnseitige Anlagefläche und zwei interne Sackgewindelöcher für die Abstützung des Pratzengelenkes 80 und dessen Befestigung mittels Schrauben 82 aufweist. Der als im wesentlichen gerader Stab mit den endseitig angeschmiedeten Lageraugen 76, 79 ausgebildete Panhardstab 15 erstreckt sich aufgrund einer wie vorstehend beschriebenen Anlenkung annähernd parallel oder leicht schräg zum Mittelbereich 18 des Starrachskörpers 3 verlaufend.

Die beiden Multifunktionslagerschilde 16, 17 weisen jeweils einen zur Fahrzeugmitte hin abragenden Vorsprung 83 bzw. 84 auf, in dessen von außen freiem Innenraum eine Anlenkstelle für die Starrachse gegeben ist, und zwar in Form einer Anlagefläche und einer Querbohrung 85, in die bei Montage ein das vordere Längslenker-Lagerauge 26 bzw. 27 durchdringender Lagerbolzen eingebaut und anschließend jede dieser beiden Lagerstellen von außen her durch einen mittels mehrerer Schrauben 86 am Multifunktionslagerschild 16 bzw. 17 befestigten Deckel 87 gesichert wird.

## Patentansprüche

1. Fahrgestell eines schweren Nutzfahrzeuges, mit einem Rahmen, dessen beide Längsträger (1, 2) über mehrere Querträger miteinander verbunden sind, und mit mehreren Achsen, von denen wenigstens eine eine Starrachse ist, über deren Starrachskörper (3) sich ein von vorne gesehen U-förmiger Querträger (38) erstreckt, der die beiden Rahmen-Längsträger (1, 2) miteinander verbindet und mit seiner Quertraverse (14) dachbildend auch einen darunter verlaufenden Panhardstab (15) überbrückt, **gekennzeichnet durch** folgende Merkmale:
a) die Starrachse ist nach Art einer selbststabilisierenden Verbundlenkerachse ausgebildet, bei der die Funktion eines das Wanken des Nutzfahrzeuges begrenzenden Stabilisators einem Starrachskörper-Längslenker-Verbund (3; 4, 5) aufgeprägt ist, der
a1) sich aus dem Starrachskörper (3) und zwei achsführenden Längslenkern (4, 5) zusammensetzt, die am Starrachskörper (3) weit voneinander beabstandet jeweils stirnseitig vorn oder hinten mittels Schrauben (25) kraft- und gegebenenfalls auch formschlüssig angeflanscht befestigt sind, und
a2) mit den freien Enden der beiden Längslenker (4, 5) an rahmenfesten Lagerböcken (16, 17) angelenkt ist,
und bei dem
a3) der Starrachskörper (3) in einem geraden Mittelbereich (18) zwischen den angeschlossenen Längslenkern (4, 5) definiert torsionsfähig ausgebildet ist sowie
a4) die beiden Längslenker (4, 5) in Vertikalrichtung gesehen vergleichsweise biegesteif, um ihre Längsachse aber begrenzt tordierbar ausgebildet und hinsichtlich ihrer Biegesteifigkeit sowie Torsionsfähigkeit auf den Gesamtstabilisierungseffekt in Verbindung mit dem torsionsfähigen Starrachskörper (3) abgestimmt sind **durch** entsprechende Bemessung und Formgebung der hierfür maßgeblichen Querschnitte,
und an dem
a5) die achsseitige Anschlussstelle für das eine Ende des Panhardstabes (15) vorgesehen ist, dessen anderes Ende in einer rahmenseitigen Anschlussstelle am U-förmigen Querträger (38) angelenkt ist.

2. Fahrgestell nach Anspruch 1, **dadurch gekennzeichnet, dass** die beiden Seitenabschnitte des U-förmigen Querträgers (38) durch Federbeinhalter (12, 13) und der untere Querabschnitt durch eine Quertraverse (14) gebildet sind, die an ihren Endabschnitten mit den beiden Federbeinhaltern (12, 13) verbunden ist, wobei jeder Federbeinhalter (12, 13) zur Fixierung des oberen Endes (36, 37) eines aus einer Luft- oder Schraubenfeder (7, 10) und einem hierzu koaxialen Stoßdämpfer (8, 11) bestehenden Federbeines (6, 9) dient, das mit seinem unteren Ende (28, 29) an einer Anlenkstelle (32, 33) am Starrachskörper (3) angeschlossen ist.

3. Fahrgestell nach Anspruch 2, **dadurch gekennzeichnet, dass** die den unteren Querabschnitt des U-förmigen Querträgers (38) bildende Quertraverse (14) durch ein im Querschnitt hutförmiges Blechpressteil, gegebenenfalls auch Schmiede- oder Gussteil gebildet ist, das einen geraden Mittelabschnitt (39) und beiderseits derselben je einen schräg hochgezogenen Endabschnitt (40, 41) mit einem nach Art eines Maules ausgebildeten äußeren Ende aufweist, von dem jeweils ein anzuschließender Federbeinhalter (12, 13) außen übergriffen und in dessen Bereich befestigt ist.

4. Fahrgestell nach Anspruch 3, **dadurch gekennzeichnet, dass** jedes Maul an der Quertraverse (14) durch einen Ausschnitt (42, 43) in dessen Obergurt und beiderseits jedes Ausschnitts (42, 43) verbleibende Wangen (44, 45; 46, 47) gebildet ist, denen am jeweiligen Federbeinhalter (12, 13) vorn und hinten zugehörige Anlageflächen (48, 49; 50, 51) zugeordnet sind, in deren Bereich die Quertraverse (14) mit ihren Wangen (44, 45; 46, 47) abgestützt und dort durch entsprechende Bohrungen bzw. Löcher (52) durchdringende Schrauben (53) mit den Federbeinhaltern (12, 13) fest verbunden ist.

5. Fahrgestell nach einem der vorhergehenden Ansprüche, **dadurch gekennzeichnet, dass** die je Achsseite eine Anlenkstelle (32, 33) für das untere Ende (28, 29) eines Federbeines (6, 9) am Starrachskörper (3) so weit wie möglich zu einem außenendigen Radträger-Anschlusskopf (34, 35) hingerückt angeordnet ist, dass sich eine größtmögliche Federspur und eine - von vorne gesehen - gepfeilte Anordnung der beiden Federbeine (6, 9) ergibt, bei der die oberen Enden (36, 37) derselben weniger weit voneinander beabstandet sind als deren untere Enden (28, 29).

6. Fahrgestell nach einem der vorhergehenden Ansprüche, **dadurch gekennzeichnet, dass** jeder Federbeinhalter (12, 13) zumindest in seinem oberen Bereich nach Art einer nach außen offenen Halbschale (54, 55) ausgebildet ist, von deren Begrenzungswand (56, 57) das zugehörige Federbein (6, 9) im Bereich seiner Luft- oder Schraubenfeder (7, 10) radial außen mit geringem Abstand von innen her partiell überdeckt wird und an deren Kopfplatte (58, 59) das jeweilige Federbein (6, 9) obenendig abgestützt und mittels je zwei Löcher (60, 61) durchdringenden Verschraubungen (62, 63) befestigt ist, wobei ein Zentralloch (64, 65) in der Federbein-Kopfplatte (58, 59) zur Zentrierung des jeweiligen Federbeines (12, 13) und freien Durchtritt von dessen oberem Ende (36, 37) dient.

7. Fahrgestell nach Anspruch 6, **dadurch gekennzeichnet, dass** jeder Federbeinhalter (12, 13) etwa in seinem mittleren Höhenbereich einen außenseitig an der Halbschale (54, 55) anschließenden Anschlussflansch (66, 67) mit mehreren Schraubenlöchern (68, 69) aufweist, dass dieser Anschlussflansch (66, 67) etwa im Schubmittelpunkt gegeben ist, und dass jeder Federbeinhalter (12, 13) mit seinem Anschlussflansch (66, 67) über die Schraubenlöcher (68, 69) und hierzu längsträgerintern fluchtende Löcher durchdringende Schrauben (70) und zugehörigen Muttern am jeweiligen Rahmen-Längsträger (1, 2) angeflanscht befestigt ist.

8. Fahrgestell nach einem der vorhergehenden Ansprüche, **dadurch gekennzeichnet, dass** die beiden Federbeinhalter (12, 13) jeweils durch ein Stahlgussteil realisiert sind, das nach dem Abguss an erforderlichen Stellen spanabhebend nach- bzw. endbearbeitet wird und an geeigneten Stellen Durchbrüche (71, 72) zur Gewichtsreduzierung aufweist.

9. Fahrgestell nach einem der vorhergehenden Ansprüche, **dadurch gekennzeichnet, dass** einer der beiden Federbeinhalter (12, 13) als Abstütz-, Halte- und Anlenkorgan für das eine Ende des Panhardstabes (15) herangezogen und hierfür nach unten durch ein Lagerschild (73) verlängert ist, an dessen unterem Ende ein Maul und beiderseits desselben je ein Lagerauge (74, 75) ausgebildet sind, an denen der Panhardstab (15) über ein in ein an einem Ende gegebenes Lagerauge (76) eingebautes Pratzengelenk (77) und zugehörige Schrauben (78) befestigbar ist.

10. Fahrgestell nach Anspruch 9, **dadurch gekennzeichnet, dass** der Panhardstab (15) an seinem anderen, gegenüber liegenden Ende über ein in das dortige Lagerauge (79) eingebautes Pratzengelenk (80) an einem Lagerbock (81) angeschlossen ist, der entweder am Starrachskörper (3) oder einem an diesem angeschlossenen Längslenker (4 bzw. 5) entweder mitangeformt oder dort angebaut ist und an dem eine entsprechende Anlagefläche und Gewindebohrungen für die Anschraubung des Pratzengelenkes (80) mittels Schrauben (82) vorgesehen sind.

11. Fahrgestell nach Anspruch 2, **dadurch gekennzeichnet, dass** jedes der beiden Federbeine (6, 9) an seinem unteren Ende über ein in ein dortiges Lagerauge (28, 29) eingebautes Pratzengelenk (30, 31) an einer achskörperfesten Lagerstelle angelenkt ist, die durch am Starrachskörper (3) so weit wie möglich zu jeweils einem achskörperendigen Radträger-Anschlusskopf (34, 35) hingerückt mitangeformte und entsprechend spanabhebend nachbearbeitete Vorsprünge (32, 33) gebildet ist.

12. Fahrgestell nach einem der vorhergehenden Ansprüche, **dadurch gekennzeichnet, dass** die beiden Längslenker (4, 5) jeweils durch ein Schmiede- oder Gussteil realisiert sind, das nach dem Ausformen an entsprechenden Stellen spanabhebend nach- bzw. endbearbeitet wird und an dem dann, wenn dort die Anschlussstelle für das eine Ende des Panhardstabes (15) vorgesehen ist, der maulartige Lagerbock (81) nahe zur Anschlussstelle am Achskörper (3) hingerückt seitlich nach innen vorspringend am Fuß (23, 24) des Längslenkers (4, 5) befestigt oder integral mitangeformt ist.

13. Fahrgestell nach einem der vorhergehenden Ansprüche, **dadurch gekennzeichnet, dass** an jedem der beiden Längslenker (4, 5) oder dem Starrachskörper (3) je Achsseite ein Bock für das Ansetzen und Abstützen eines Wagenhebers entweder angebaut oder mitangeformt ist.

## Claims

1. A chassis of a heavy-duty commercial vehicle with a fram, whose two longitudinal members (1, 2) are connected with each other by means of several cross-members, and with several axles, of which at least one is a rigid axle over whose rigid axle beam (3) a cross-member (38) - U-shaped when viewed from the front - extends, joining the two longitudinal frame members (1, 2) with each other, and which also, forming a cover, spans, with its transverse beam (14), a Panhard rod (15) extending below the latter, **characterised by** the following features:
a) The rigid axle is designed as a self-stabilising twist-beam axle, in which the function of a stabiliser limiting the rolling motion of the commercial vehicle is invested in an assembly consisting of a rigid axle beam with longitudinal arms (3, 4, 5) which
a1) consists of the rigid axle beam (3) and of two longitudinal arms (4, 5), the latter being spaced a wide distance apart on the rigid axle beam (3), the front face of each of them being flanged onto the front or rear side of the rigid axle beam in a non-positive or, if necessary, in a positive connection by means of bolts (25)
a2) is coupled to frame-mounted bearing supports (16, 17) at the free ends of its two longitudinal arms (4, 5)
and
a3) whose rigid axle beam (3) is designed to have a defined torsional capability in a straight central area (18) located between the attached longitudinal arms (4, 5)
a4) whose two longitudinal arms (4, 5), if viewed vertically, are designed to have comparatively great flexural strength but limited torsional capability about their longitudinal axis and, in respect of their flexural strength and torsional capability, are adapted to the overall stabilising effect in conjunction with the torsion-capable rigid axle beam (3) through the suitable dimensioning and shaping of the cross-sections crucial to this
a5) and on which an axle-mounted connecting point is provided for one end of the Panhard rod (15), the other end of this being connected to a frame-mounted connecting point on the U-shaped cross-member (38).

2. A chassis according to claim 1, **characterised in that** the two side sections of the U-shaped cross-member (38) consist of spring strut holders (12, 13), the lower section consisting of a transverse beam (14) connected at its end sections with said two spring strut holders (12, 13), and that each of the spring strut holders (12, 13) serves to fix the upper end (36, 37) of a spring strut (6, 9) consisting of an air or helical spring (7, 10) and of a shock absorber (8, 11) arranged coaxially to the latter, the lower end (28, 29) of said spring strut (6, 9) being attached to an articulation point (32, 33) on the rigid axle beam (3).

3. A chassis according to claim 2, **characterised in that** the transverse beam (14) forming the lower transverse section of the U-shaped cross-member (38) consists of a sheet steel stamping with a hat-shaped cross-section, or if necessary also of a forged or cast part, having a straight central area (39) and, on each side of the same, an obliquely upwards-curved end section (40, 41) with an extremity shaped like a jaw, by which each of the spring strut holders (12, 13) that has to be attached is overlapped on the outside and fastened therein.

4. A chassis according to claim 3, **characterised in that** each jaw on the transverse beam (14) is formed by a notch (42, 43) in the extremity of the upper flange of the transverse beam (14) and by cheeks (44, 45; 46, 47) remaining on each side of each notch (42, 43), to which cheeks associated contact surfaces (48, 49; 50, 51) on the front and rear parts of the respective spring strut holders (12, 13) are assigned, in the area of which contact surfaces (48, 49; 50, 51) the transverse beam (14) is supported by its cheeks (44, 45; 46, 47) and firmly connected with the respective spring strut holders (12, 13) by means of bolts (53) passing through the corresponding drill and bolt holes (52) provided in said contact surfaces.

5. A chassis according to one of the foregoing claims, **characterised in that** the articulation points (32, 33) provided on each side of the axle for the lower end (28, 29) of a spring strut (6, 9) are positioned on the rigid axle beam (3) as closely as possible to a wheel-bearing connecting head (34, 35) located on the outer extremity, so as to permit a maximum possible spring track and so as to produce a - when viewed from the front - convergent arrangement of the two spring struts (6, 9), in which the upper ends (36, 37) of the latter are less far apart than their lower ends (28, 29).

6. A chassis according to one of the foregoing claims, **characterised in that** each of the spring strut holders (12, 13) is, at least in its upper area, designed as a half shell (54, 55) open towards the outside, the associated spring strut (6, 9), in the area of its air or helical spring (7, 10), being partially covered radially on the outside, and with but small clearance from the inside, by the limiting wall (56, 57) of said half shell, by whose covering plate (58, 59) the upper end of each spring strut (6, 9) is supported and on which it is fastened by means of bolted connections (62, 63), each passing through two holes (60, 61), a central hole (64, 65) in the spring strut covering plate (58, 59) being provided for centring each spring strut (12, 13) and for the free passage of its upper end (36, 37).

7. A chassis according to claim 6, **characterised in that** each of the spring strut holders (12, 13) has, approximately halfway up, a connecting flange (66, 67) with several bolt holes (68, 69) that is flanged onto the outside of the half shell (54, 55), that said connecting flange (66, 67) is located roughly in the thrust centre, and that each of the spring strut holders (12, 13) is flanged onto the respective longitudinal frame member (1, 2) by means of its connecting flange (66, 67), with the aid of bolts (70) and associated nuts, said bolts passing through the bolt holes (68, 69) and through the holes aligned to these on the inside of the longitudinal member.

8. A chassis according to one of the foregoing claims, **characterised in that** each of the spring strut holders (12, 13) is designed in the form of a cast steel part which, after being cast, is machined and finished at the points necessary and has openings (71, 72) at suitable points for reduction of weight.

9. A chassis according to one of the foregoing claims, **characterised in that** one of the two spring strut holders (12, 13) is used as a supporting, retaining, and coupling element for one end of the Panhard rod (15) and for that purpose is extended downwards by means of a bearing bracket (73) at whose lower end a jaw and, at either side of said jaw, bearing eyes (74, 75) are provided, to which bearing eyes (74, 75) the Panhard rod (15) can be fastened by means of a claw-type joint (77) installed in a bearing eye (76) provided at one of its ends and by associated bolts (78).

10. A chassis according to claim 9, **characterised in that** the other, opposite extremity of the Panhard rod (15) is connected, by means of a claw-type joint (80) installed in the bearing eye (79) located at said opposite extremity, to a bearing support (81), which is either an integral part of the rigid axle beam (3) or of one of the two longitudinal arms (4, 5) connected thereto or is mounted thereon, and on which an appropriate contact surface and threaded drill holes are provided for the attachment of the claw-type joint (80) by means of bolts (82).

11. A chassis according to claim 2, **characterised in that** the lower ends of each of the two spring struts (6, 9) are coupled, by means of a claw-type joint (30, 31), incorporated into a bearing eye (28, 29) located at said lower end of the spring strut (6, 9), to an axle beam-anchored bearing point which is formed by projections (32, 33), shaped as an integral part of and subsequently machined on the rigid axle beam (3), and positioned as closely as possible to each of the wheel-bearing connecting heads (34, 35) located on the outer extremities of said axle beam.

12. A chassis according to one of the foregoing claims, **characterised in that** each of the two longitudinal arms (4, 5) is designed in the form of a cast or forged part which, after being shaped, is subsequently machined and finished at the necessary points and to whose base, if the connecting point for one end of the Panhard rod (15) is provided there, the jaw-like bearing support (81) is fastened or forms an integral part of the base (23, 24) of said longitudinal arm (4, 5), and, protruding laterally towards the inside, is positioned adjacent to said connecting point on the axle beam (3).

13. A chassis according to one of the foregoing claims, **characterised in that**, on each of the two longitudinal arms (4, 5) or on the rigid axle beam (3), at each side of the axle a bracket for positioning and bracing a jack is either mounted thereon or forms an integral part of said longitudinal arm (4, 5) or said axle beam (3).

## Revendications

1. Châssis de véhicule utilitaire lourd à un cadre dont les deux longerons (1, 2) sont reliés par plusieurs traverses et à plusieurs essieux dont l'un au moins est un essieu rigide sur le corps (3) duquel s'étend un berceau (38) ayant, vu de l'avant, la forme d'un U, lequel relie les deux longerons (1, 2) du cadre et dont la traverse (14) recouvre également en toit une barre Panhard (15) située dessous, **caractérisé en ce que** :
a) l'essieu rigide se présente à la manière d'un essieu à bras tirés autostabilisateur sur lequel la fonction de stabilisation limitant le roulis du véhicule est assignée à un ensemble corps d'essieu rigide /bras longitudinaux (3 ; 4, 5) qui
a1) se compose du corps d'essieu rigide (3) et de deux bras longitudinaux (4, 5) guidant l'essieu et qui, très écartés, sont bridés en bout, à l'avant ou à l'arrière, au corps (3) au moyen de vis (25), avec liaison par adhérence ainsi que, le cas échéant, par obstacle, et
a2) est articulé aux extrémités libres des deux bras longitudinaux (4, 5) sur des supports (16, 17) solidaires du cadre,
et sur lequel
a3) le corps d'essieu rigide (3) présente une capacité de torsion définie dans une zone médiane droite (18) située entre les bras longitudinaux articulés (4, 5) ainsi que
a4) les deux bras longitudinaux (4, 5) sont relativement rigides en flexion dans la direction verticale, mais à flexibilité limitée en torsion autour de leur axe longitudinal, leur rigidité en flexion ainsi que leur capacité de torsion étant adaptées, en liaison avec la capacité de torsion du corps d'essieu rigide (3), à l'effet de stabilisation global visé par configuration et dimensionnement appropriés des sections déterminantes et
a5) le point de raccordement côté essieu est prévu pour l'une des extrémités de la barre Panhard (15), l'autre extrémité étant articulée en un point de raccordement côté cadre, au niveau du berceau en U (38).

2. Châssis suivant la revendication 1, **caractérisé en ce que** les deux ailes du berceau en U (38) sont constitués de montants de jambe McPherson (12, 13) et que le bas est constitué d'une traverse (14) reliée à ses extrémités aux deux montants (12, 13), chacun des montants (12, 13) servant à fixer l'extrémité supérieure (36, 37) d'une jambe McPherson (6, 9), constituée d'un ressort pneumatique ou hélicoïdal (7, 10) et d'un amortisseur (8, 11) qui lui est coaxial, dont l'extrémité inférieure (28, 29) est raccordée à un point d'articulation (32, 33) situé sur le corps d'essieu (3).

3. Châssis suivant la revendication 2, **caractérisé en ce que** la traverse (14) formant le bas du berceau en U (38) est constituée d'une pièce emboutie ou, le cas échéant, d'une pièce forgée ou moulée à section en forme de chapeau, présentant une partie médiane droite (39) et, de part et d'autre, une partie terminale relevée en biais (40, 41) dont l'extrémité extérieure se présente à la manière d'une mâchoire enserrant un montant de jambe McPherson à raccorder (12, 13), au niveau de laquelle il est fixé.

4. Châssis suivant la revendication 3, **caractérisé en ce que** chaque mâchoire de la traverse (14) est constituée d'une découpe (42, 43) pratiquée dans sa membrure supérieure et de joues (44, 45; 46, 47) laissées de part et d'autre de chaque découpe (42, 43), auxquelles sont associées, à l'avant et à l'arrière du montant de jambe McPherson considéré (12, 13), des portées (48, 49; 50, 51) au niveau desquelles s'appuie la traverse (14) par ses joues (44, 45 ; 46, 47) et où elle est fixée aux montants de jambe McPherson (12, 13) par des vis (53) passant dans des trous correspondants (52).

5. Châssis suivant l'une des revendications précédentes, **caractérisé en ce que** de chaque côté de l'essieu, est disposé sur le corps d'essieu rigide (3) un point d'articulation (32, 33) destiné à l'extrémité inférieure (28, 29) d'une jambe McPherson (6, 9) et déporté le plus possible vers la tête de raccordement d'un support de roue (34, 35) de manière à obtenir une voie de suspension maximale et - vu de l'avant - une disposition en flèche des deux jambes McPherson (6, 9), dans laquelle les extrémités supérieures (36, 37) desdites jambes sont moins écartées que leurs extrémités inférieures (28, 29).

6. Châssis suivant l'une des revendications précédentes, **caractérisé en ce que** chaque montant de jambe McPherson (12, 13) se présente, au moins à sa partie supérieure, à la manière d'une demi-coque ouverte vers l'extérieur (54, 55), dont l'enveloppe (56, 57) recouvre partiellement la jambe McPherson associée (6, 9) au niveau de son ressort pneumatique ou hélicoïdal (7, 10), radiatement vers l'extérieur et à faible distance de l'intérieur, et sur la chapelle (58, 59) de laquelle s'appuie à son extrémité supérieure la jambe McPherson associée (6, 9) et à laquelle elle est fixée au moyen de boulons (62, 63) passant par deux trous (60, 61), un trou central (64, 65) pratiqué dans la chapelle (58, 59) servant à centrer la jambe McPherson considérée (12, 13) et à laisser passer son extrémité supérieure (36, 37).

7. Châssis suivant la revendication 6, **caractérisé en ce que** chaque montant de jambe McPherson (12, 13) présente, à peu près au milieu de sa hauteur, une bride de raccordement (66, 67) en saillie vers l'extérieur de la demi-coque (54, 55) et pourvue de plusieurs trous de vis (68, 69), que cette bride de raccordement (66, 67) se situe approximativement au centre de poussée et que chaque montant de jambe McPherson (12, 13) est fixé au longeron considéré (1, 2) par sa bride de raccordement (66, 67), par l'intermédiaire de vis (70) traversant les trous de vis (68, 69) et des trous alignés en conséquence à l'intérieur du longeron ainsi que d'écrous associés.

8. Châssis suivant l'une des revendications précédentes, **caractérisé en ce que** les deux montants de jambe McPherson (12, 13) sont réalisés chacun sous forme de pièce moulée en acier, reprise et finie par usinage aux points nécessaires et présentant des ajours (71, 72) en des points adéquats en vue d'en réduire le poids.

9. Châssis suivant l'une des revendications précédentes, **caractérisé en ce que** l'un des deux montants de jambe McPherson (12, 13) est mis à profit en tant qu'organe d'appui, de retenue et d'articulation de l'une des extrémités de la barre Panhard (15) et est prolongé à cet effet vers le bas par un flasque (73), à l'extrémité inférieure duquel sont ménagés une mâchoire et, de part et d'autre de cette dernière, deux coussinets (74, 75) auxquels peut se fixer la barre Panhard (15) par une articulation à griffes (77) montée dans un coussinet (76) prévu à une extrémité ainsi que par des vis associées (78).

10. Châssis suivant la revendication 9, **caractérisé en ce que** la barre Panhard (15) est raccordée à son autre extrémité opposée, par l'intermédiaire d'une articulation à griffes (80) montée dans le coussinet (79) prévu à ce niveau, à un support (81) qui est soit venu de fonderie soit rapporté soit sur le corps d'essieu rigide (3) soit sur le bras longitudinal (4, 5) raccordé à ce dernier et sur lequel sont prévus une portée et des trous taraudés adéquats pour la fixation de l'articulation à griffes (80) au moyen de vis (82).

11. Châssis suivant la revendication 2, **caractérisé en ce que** chacune des deux jambes McPherson (6, 9) est articulée à son extrémité inférieure, par l'intermédiaire d'une articulation à griffes (30, 31) montée dans un coussinet (28, 29) prévu à ce niveau, sur un palier solidaire du corps d'essieu, constitué de bossages (32, 33) venus de fonderie et repris par usinage sur le corps d'essieu rigide (3), déportés le plus possible vers la tête de raccordement de support de roue (34, 35), en bout du corps d'essieu.

12. Châssis suivant l'une des revendications précédentes, **caractérisé en ce que** les deux bras longitudinaux (4, 5) sont réalisés chacun sous forme de pièce forgée ou moulée, reprise et finie par usinage aux points nécessaires et sur laquelle, lorsqu'il y est prévu le point de raccordement de l'une des extrémités de la barre Panhard (15), est fixé ou intégré de fonderie le support de type mâchoire (81), à proximité du point de raccordement sur le corps d'essieu (3), avec saillie latérale vers l'intérieur au niveau du pied (23, 24) du bras longitudinal (4, 5).

13. Châssis suivant l'une des revendications précédentes, **caractérisé en ce que** sur chacun des deux bras longitudinaux (4, 5) ou sur le corps d'essieu rigide (3), de chaque côté de l'essieu, est soit rapporté soit venu de fonderie un support de positionnement et de soutien de cric.
